# EUROPEAN PATENT APPLICATION

(11) **EP 2 492 312 A1**
(43) Date of publication of application: **29.08.2012**
(21) Application number: 12305182.3
(22) Date of filing: 17.02.2012
(51) Int. Cl.: C08L 27/06, H01B 3/44, C08L 23/08, C08L 33/08

(54) **Polymer resin composition having resistance to epoxy based paint and alkyd based paint**

(30) Priority: 25.02.2011 KR 20110017163
(71) Applicant: Nexans, 75008 Paris (FR)
(72) Inventor: KIM, Seong-Jin, 361-871 Chunbuk (KR); LEE, Ho-Kyon, 361-100 Chungbuk (KR); NAM, Su-Seok, 361-201 Chungbuk (KR); KIM, Jong-Hee, 683-793 Ulsan (KR); SEONG, Chan-Young, 429-450 Gyeonggi-do (KR); KIM, Dong-Hun, 406-735 Incheon (KR)
(74) Representative: Peguet, Wilfried

(57) **Abstract**

The present invention relates to a novel polymer resin composition comprising phthalate-free plasticizer, which has resistance to epoxy based paint and alkyd based paint and is environment friendly. Also, the present invention relates to a polymer resin material, in particular a cable or electric wire for using in ships, etc., manufactured using said polymer resin composition, which remarkably improves physical and chemical properties of the conventional sheathing material for using in ships.

## Description

### Field of the invention

The present invention relates to a polymer resin composition having a resistance to epoxy based paint and alkyd based paint, and to a polymer resin material manufactured using said composition.

### Background of the invention

In building ships, it is usual that epoxy based paints and/or alkyd based paints are applied on the ships in order to prevent corrosion of their surfaces. Such paints are often applied on the electric wires installed in the ships. In this case, the epoxy based paints and alkyd based paints are brought into contact with the sheath of electric wire. This event mechanically and/or physically modifies the polyvinyl chloride which is the main component of the sheath, and thus promotes the aging of electric wires. As a result, this is contributed to shorten the life of electric wires.

Meanwhile, most of the PVC compounds conventionally used as the sheathing material in ships essentially comprise plasticizers. In particular, phthalate-based plasticizers such as DEHP, DBP, BBP, DINP, DIDP are most frequently used. Such phthalate-based plasticizers play a role in making PVC smooth and flexible.

However, the phthalate-based plasticizer is suspected of being an endocrine disruptor which enters the body of animals or humans and then interrupts or disrupts the actions of hormones. In addition, it was reported based on the experimental results of animal model that it is a toxic substance which adversely affects liver, kidney, heart, lung, etc. and results in female infertility, reduced sperm count, etc. in reproductive organs. Researches and studies on the influence of phthalate-based plasticizers have continued, and the conflicting results have been still found.

In light of the above, there has been a long-standing debate on the phthalate-based plasticizers. For this reason, the Korean Ministry of Environment provides in 'the regulation on the substances restricted or prohibited in the preparation, import or use thereof' that the phthalate-based plasticizers such as DEHP, etc. and the mixtures comprising the particular amounts of said plasticizers should not be used in some of products for children, blood bags and infusion solution bags since October, 2007.

### Detailed description of the invention

In view of this background, there is a need to develop polymer resin compositions which can prevent the mechanical and/or physical modifications induced by epoxy based paints or alkyd based paints in the polyvinyl chloride of electric wires, and thus extend the life of electric wires or cables. In addition, there is also a need to develop polymer resin compositions not comprising phthalate-based plasticizers which have been debated as an endocrine disruptor till now and are prohibited in some of products by the Korean Ministry of Environment.

Thus, in order to resolve said problems in the prior art, the inventors provide a polymer resin composition not comprising phthalate-based plasticizers but phthalate-free plasticizers, which has resistance to epoxy based paints and alkyd based paints.

The polymer resin composition according to the present invention comprises a polyvinyl chloride (PVC) resin as a base resin, characterized in that the composition comprises the following components based on 100 parts by weight of said base resin:
- 10 to 60 parts by weight of at least one plasticizer selected from phthalate-free plasticizers;
- 1 to 15 parts by weight of at least one stabilizer selected from the group consisting of lead-based, metal soap-based, complex metal-based and organic tin-based materials;
- 10 to 60 parts by weight of at least one flame retardant selected from the group consisting of aluminum hydroxide, magnesium hydroxide and magnesium hydroxide carbonate compounds;
- 1 to 20 parts by weight of at least one flame retardant aid selected from the group consisting of antimony-based compounds, halogen-based compounds and boron-based compounds; and
- 1 to 60 parts by weight of polar polymer resin selected from ethylene acrylate copolymers.

In the context of the present invention, "at least one selected from the group consisting of" refers to a single substance(s) comprising one component or a mixture(s) comprising two or more components.

The plasticizer comprised in the polymer resin composition is a phthalate-free plasticizer, but not a phthalate-based plasticizer which has been debated as an endocrine disruptor and is prohibited in some of products by the Korean Ministry of Environment. Preferably, said phthalate-free plasticizer is a single substance comprising one component or a mixture comprising two or more components selected from the group consisting of C8-C20 alcohol-based plasticizer, ester-based plasticizer, carboxylate-based plasticizer, aliphatic plasticizer and benzoate-based plasticizer. The examples of ester-based phthalate-free plasticizer include phosphate ester plasticizers, polyester plasticizers, tetrabromophthalic acid bis esters, alkyl aryl phosphate esters, etc.; the examples of carboxylate-based phthalate-free plasticizer include dinonyl cyclohexanedicarboxylate, etc.; the examples of phthalate-free aliphatic plasticizer include DOA, DOS, etc.; and the examples of benzoate-based phthalate-free plasticizer include benzoate ester plasticizers such as Benzoflex®, etc.; but it should be understood that it is not limited to said examples.

If the phthalate-free plasticizer is comprised in the amount of less than 10 parts by weight based on 100 parts by weight of the polyvinyl chloride resin, a polymer resin material manufactured using said polymer resin composition has lower tensile strength, elongation and flexibility. If the phthalate-free plasticizer is comprised in the amount of more than 60 parts by weight based on 100 parts by weight of the polyvinyl chloride resin, the polymer resin material does not have a desirable degree of tensile strength and elongation.

The stabilizer comprised in the polymer resin composition is preferably a single substance comprising one component or a mixture comprising two or more components selected from the group consisting of lead-based, metal soap-based, complex metal-based and organic tin-based materials. The examples of lead-based stabilizer include TLS (Tribasic Lead Sulfate), DLS (Dibasic Lead Stearate), DLP (Dibasic Lead Phosphite), etc.; the examples of metal soap-based stabilizer include Ba-St (stearate), Ca-St, Zn-St, etc.; the examples of complex metal-based stabilizer include Ca-Zn-Mg, Ca-Zn-Al, Ba-Cd-Zn, etc.; and the examples of organic tin-based stabilizer include mercaptide-based, malate-based, carboxylate-based materials, etc.; but it should be understood that it is not limited to said examples.

The flame retardant aid comprised in the polymer resin composition is preferably a single substance comprising one component or a mixture comprising two or more components selected from the group consisting of antimony-based compounds, halogen-based compounds and boron-based compounds. More preferably, antimony trioxide is used. Alternatively, it is preferable that the flame retardant aid is a bromine or chloride compound. The bromine-based flame retardant aid includes tetrabromophthalic acid bis esters, which does not belong to the harmful brominated substances restricted in RoHS, for example PBB or PBDE. Alternatively, it is preferable that the flame retardant aid is a zinc borate or borate hydroxide.

In another embodiment of the present invention, it relates to a polymer resin material manufactured using said polymer resin compositions, in particular sheaths of cables or electric wires. Such a polymer resin material manufactured has resistance to epoxy based paints and alkyd based paints and is also environment-friendly. The epoxy based paints include, but are not limited to, EP 1240, EP 1760, ET 5740, etc. The alkyd based paints include, but are not limited to, MP-120, LT-313, etc.

### Advantageous Effects

Although phthalate-based plasticizers are not used in the polymer resin materials manufactured from polymer resin compositions according to the present invention, in particular cables or electric wires, the good tensile strength and elongation are obtainable at room temperature. Even after heated at a high temperature, the tensile retention and elongation retention representing thermal resistances are good, and the loss of weight is not big. In addition, it was proved that mechanical properties such as oil resistance, flame resistance and cold resistance are also good enough to satisfy the related assessment criteria.

Furthermore, even when the cables are applied by epoxy based paints and alkyd based paints and also heated at a high temperature, both the tensile retention and the elongation retention are good and any cracks were not observed in the U-type bending test. Thus, the polymer resin composition according to the present invention has resistance to both epoxy based paints and alkyd based paints.

The present invention is described in further detail in the following Examples which are not in any way intended to limit the scope of the invention as claimed. In addition, it will appear to those ordinarily skilled in the art that various modifications may be made to the disclosed embodiments, and that such modifications are intended to be within the scope of the present invention.

### Examples

### 1. Preparation of paints

The epoxy based paints EP 1240, EP 1760 and ET 5740 and the alkyd based paints MP-120 and LT-313 described in the following Table 1 are the paints often used in the various application fields including building ships.

**Table 1**

| | Contents (% by weight) | | | | |
|---|---|---|---|---|---|
| | Epoxy based paint | | | Alkyd based paint | |
| | EP 1240 | EP 1760 | ET 5740 | MP-120 | LT-313 |
| Epoxy resin | 31∼40 | 11∼20 | | | |
| Epoxy | | 1∼10 | 11∼20 | | |
| Alkyd | | | | 10∼20 | 21∼30 |
| Xylene | 10∼20 | 11∼20 | 11∼20 | 5∼9 | 1∼10 |
| Light aromatic solvent naphtha | | 1∼10 | 1∼10 | 21∼30 | |
| N-butyl alcohol | 1∼40 | 1∼10 | | 5∼9 | |
| Titanium dioxide | 10∼20 | 11∼20 | 21∼30 | | 11∼20 |
| Talc | 31∼40 | | | | |
| Propylene glycol monomethyl ether | | 1∼10 | 1∼10 | | |
| Quartz | | 11∼20 | | | |
| Talc, non-asbestos form | | 11∼20 | 11∼20 | | |
| Methyl isobutyl ketone | | | 1∼10 | | |
| Epichlorohydrin-bisphenolresin | | | 1∼10 | | |
| Deodorized kerosene | | | | | 21∼30 |
| Calcium carbonate | | | | 21∼30 | |
| Zinc Phosphate | | | | 10∼20 | |
| Others | 1∼4 | 1∼10 | 1∼10 | 5∼9 | 1∼10 |

### 2. Preparation of polymer resin compositions

The polymer resin compositions included in the scope of the invention were used in Examples 1 to 7, while the polymer resin compositions not included in the scope of the invention were used in Comparative examples 1 to 4.The specific components and contents (part by weight) of the polymer resin compositions are described in the following Table 2.

**Table 2**

| | Example | | | | | | | Comparative example | | | |
|---|---|---|---|---|---|---|---|---|---|---|---|
| | 1 | 2 | 3 | 4 | 5 | 6 | 7 | 1 | 2 | 3 | 4 |
| Polyvinyl chloride | 100 | 100 | 100 | 100 | 100 | 100 | 100 | 100 | 100 | 100 | 100 |
| Chlorinated polyethylene | | | | | | | | | | 50 | 50 |
| Nitrile rubber (NBR) | | | | | | | | 50 | 50 | | |
| Ethylene acrylate copolymer | 40 | 40 | 50 | 60 | 50 | 30 | 60 | | | | |
| Dinonyl cyclohexanedic arboxylate | 30 | 30 | 30 | 20 | 30 | 30 | 30 | 30 | | 30 | 40 |
| Tetrabromophth alic acid bis ester | | 5 | | 10 | | 15 | 10 | | | | |
| Alkyl aryl phosphate ester | 20 | 5 | | | | 15 | | | | | |
| TOTM(trioctylt rimellitate) | | | | | | | 10 | | 30 | | |
| Calcium Stearate | 7 | 7 | 7 | 7 | 7 | 7 | 7 | 7 | 7 | 7 | 7 |
| Magnesium hydroxide | | | 20 | | 20 | | | | | | |
| Aluminum hydroxide | 60 | 40 | 40 | 40 | 40 | 40 | 60 | 40 | 40 | 40 | 40 |
| Magnesium hydroxide carbonate | 10 | 20 | | 20 | 10 | | 20 | | | | |
| Antimony trioxide | 10 | 10 | 10 | 10 | 10 | 10 | 10 | 10 | 10 | 10 | 10 |
| Borate hydroxide | | | 10 | 10 | | 10 | | | | | |
| Zinc borate | | 10 | | | 10 | | 10 | | | | |

### 3. Methods of test and Results of assessments

### (1) Methods of test when paints are not applied on cables

The sheaths of cables were prepared from the compositions of Examples 1 to 6 and the compositions of Comparative examples 1 to 3 by using the extruders of plant. The specimens were taken from the cables on which paints are not applied, and then assessed on whether the following criteria are satisfied.

### A. Criteria for properties at a room temperature

According to IEC 60811-1-1, when measured at a tensile rate of 500mm/min, the tensile strength should be at least 1.25 kgf/mm², and the elongation should be at least 150%.

### B. Criteria for properties at an elevated temperature

After the specimen was placed at 121°**C** for 168 hours, the variations of tensile strength and elongation were determined relatively to the tensile strength and the elongation at a room temperature. In this test, the retention should be at least 75%.

In this regard, the JIS-C-3410 standard requires a temperature of 100°C as the criteria for properties at an elevated temperature. However, the inventors conducted tests at a temperature of 121°C in order to confirm the thermal resistance higher than that required in said standard.

### C. Criteria for oil resistance

After the specimen was placed in IRM 902 oil at 70°C for 4 hours, the variations of tensile strength and elongation were determined. In this test, the tensile retention should be at least 80 %, and the elongation retention should be at least 60 %.

### D. Criteria for heating loss

After the specimen was placed at 100°C for 168 hours, loss of weight per unit surface area of specimen after heated should be 1.5mg/cm² or less.

### E. Flame resistance test

The specimen was tested according to the IEC 60332-2 Cat. A standard for the flame resistance test. When the flame resistance of materials was determined according to the ASTM D 2863, the oxygen index should be at least 30%.

### F. Cold resistance test

The specimen was prepared according to the CSA C 22.2 No.3. The cold impact test was conducted at -35°C according to the test standard of the CAS C 22.2 No.3, and the cold bending test was conducted at -40°**C** according to the test standard of the CAS C 22.2 No.3.

**Table 3**

| | | Example | | | | | | Comparative example | | |
|---|---|---|---|---|---|---|---|---|---|---|
| | | 1 | 2 | 3 | 4 | 5 | 6 | 1 | 2 | 3 |
| At a room temperature | Tensile strength (kgf/mm²) | 1.65 | 1.69 | 1.71 | 1.78 | 1.45 | 1.79 | 1.82 | 1.84 | 1.78 |
| | Elongation (%) | 251 | 262 | 220 | 286 | 195 | 291 | 205 | 201 | 188 |
| At an elevated temperature | Tensile retention (%) | 93 | 97 | 94 | 94 | 92 | 98 | 122 | 115 | 88 |
| | Elongation retention (%) | 83 | 85 | 88 | 84 | 89 | 97 | 45 | 57 | 69 |
| Oil resistance | Tensile retention (%) | 94 | 91 | 92 | 94 | 95 | 96 | 95 | 94 | 56 |
| | Elongation retention (%) | 83 | 80 | 83 | 82 | 81 | 75 | 82 | 87 | 35 |
| Heating loss (mg/cm²) | | 0.42 | 0.46 | 0.42 | 0.51 | 0.08 | 0.53 | 0.44 | 0.15 | 0.41 |
| Flame resistance | Oxygen index (%) | 31 | 35.5 | 35 | 37 | 36 | 34 | 27 | 29 | 30 |
| Cold resistance | Cold impact | Pass | Pass | Pass | Pass | Pass | Pass | Fail | Fail | Fail |
| | Cold bending | Pass | Pass | Pass | Pass | Pass | Pass | Fail | Fail | Fail |

The Table 3 shows the data obtained by using the specimens of cables prepared from the compositions of Examples 1 to 6 and the compositions of Comparative examples 1 to 3.

The specimens of Examples 1 to 6 satisfied the assessment criteria for tensile strength and elongation at a room temperature. In addition, said specimens also satisfied the assessment criteria for tensile retention and elongation retention at a temperature of 121°C.

However, when the specimens of Comparative examples 1 to 3 were heated at a temperature of 121°C, all of them showed the elongation retention much lower than 75%, and thus did not satisfy the assessment criteria.

Furthermore, the specimens of Examples 1 to 6 satisfied all of the assessment criteria for oil resistance, heating loss, flame resistance and cold resistance.

However, the specimens of Comparative examples 1 and 2 showed less than 30 % in the flame resistance test, and thus did not satisfy the assessment criteria. In addition, they were failed in both the cold impact test and the cold bending test to assess a cold resistance. The specimen of Comparative example 3 did not satisfy the assessment criteria for the oil resistance test since it showed the tensile retention 56 % much lower than 80 % and the elongation retention 35 % much lower than 60 %. In addition, it was failed in both the cold impact test and the cold bending test to assess a cold resistance.

Next, as Comparative example 5, the inventors further prepared a cable specimen from the polymer resin composition comprising phthalate-based plasticizers, and then assessed its properties and effects according to the above mentioned tests. The specific components and contents (part by weight) of the polymer resin compositions used in Comparative example 5 are described in the following Table 4.

**Table 4**

| | | |
|---|---|---|
| PVC | Polyvinyl chloride | 100 |
| plasticizer | DIDP (diisodecyl phthalate) | 50 |
| | TOTM (trioctyltrimellitate) | 30 |
| stabilizer | TLS (Tribasic Lead Sulfate) | 7 |
| | DBL (Dibasic Lead Stearate) | 0.8 |
| Filler | Talc | 30 |
| flame retardant | Sb₂O₃ | 10 |

The results of assessments showed that the polymer resin material manufactured using the polymer resin composition comprising phthalate-based plasticizers according to Comparative example 5 was failed in both the cold impact test and the cold bending test to assess a cold resistance.

Thus, it is confirmed that the composition of the present invention has a good cold resistance, while not comprising phthalate-based plasticizers that are able to have harmful effects on human bodies. On the contrary, the composition comprising phthalate-based plasticizers does not have a required cold resistance.

### (2) Resistance test when paints are applied on cables

The sheaths of cables were prepared from the composition of Example 7 and the composition of Comparative example 4.The specimens were prepared by slicing the sheaths separated from cables. The epoxy based paints EP 1240, EP 1760 and ET 5740 and the alkyd based paints MP-120 and LT-313were applied on the outer surface of the specimens, respectively. And then, whether the following criteria are satisfied was assessed on each specimen.

### A. Criteria for properties at an elevated temperature

After the specimen was placed at 100°C for 168 hours, the variations of tensile strength and elongation were determined relatively to the tensile strength and the elongation at a room temperature when paints are not applied on cables. In this test, the retention should be at least 75 %.

### B. U-type bending test

After the completed cables covered by sheaths prepared from the composition of Example 7 and the composition of Comparative example 4 were bent in a U-form (bending radius: 6D),the epoxy based paints and the alkyd based paints were applied on said cables, respectively. And then, the cables were placed at 100°C for 168 hours. In this test, any cracks should not be observed with the naked eye in the cables.

The following Tables 5 and 6respectively show the paint resistance data obtained by using the cables prepared from the composition of Example 7 and the composition of Comparative example 4.

**Table 5**

| | | Epoxy based paint | | | Alkyd based paint | |
|---|---|---|---|---|---|---|
| | | EP 1240 | EP 1760 | EP 5740 | MP 120 | LT 313 |
| At a room temperature | Tensile strength (kgf/mm²) | 1.50 | 1.50 | 1.50 | 1.50 | 1.50 |
| | Elongation (%) | 385 | 385 | 385 | 385 | 385 |
| At an elevated temperature | Tensile retention (%) | 97 | 94 | 94 | 109 | 108 |
| | Elongation retention (%) | 92 | 89 | 83 | 91 | 96 |
| U-type bending test | | No crack | No crack | No crack | No crack | No crack |

**Table 6**

| | | Epoxy based paint | | | Alkyd based paint | |
|---|---|---|---|---|---|---|
| | | EP 1240 | EP 1760 | EP 5740 | MP 120 | LT 313 |
| At a room temperature | Tensile strength (kgf/mm²) | 1.69 | 1.69 | 1.69 | 1.69 | 1.69 |
| | Elongation (%) | 340 | 340 | 340 | 340 | 340 |
| At an elevated temperature | Tensile retention (%) | 61 | 49 | 30 | 96 | 88 |
| | Elongation retention (%) | 84 | 82 | 67 | 98 | 97 |
| U-type bending test | | cracked | cracked | cracked | cracked | cracked |

As seen in Table 5, the cable prepared from the composition of Example 7 had a good tensile strength and elongation to all of the epoxy- and alkyd-based paints at a room temperature. Even after heated to 100°C, both the tensile retention and the elongation retention were higher than75 %. Furthermore, in the U-type bending test, any cracks were not observed against all of the epoxy- and alkyd-based paints.

On the contrary, as seen in Table 6, when the cable prepared from the composition of Comparative example 4 was applied by the epoxy based paint EP 1240 or EP 1760 and then heated to 100°C, its tensile retention did not exceed 75%. In addition, when the cable of Comparative example 4 was applied by the epoxy based paint EP 5740 and then heated to 100°C, both the tensile retention and the elongation retention did not exceed 75 %. Furthermore, in the U-type bending test, cracks were observed against all of the epoxy- and alkyd-based paints.

## Claims

1. A polymer resin composition comprising polyvinyl chloride resin as base resin and having resistance to epoxy based paint and alkyd based paint, **characterized in that** the composition comprises the following components based on 100 parts by weight of the base resin:
- 10 to 60 parts by weight of at least one plasticizer selected from phthalate-free plasticizer;
- 1 to 15 parts by weight of at least one stabilizer selected from the group consisting of lead-based, metal soap-based, complex metal-based and organic tin-based materials;
- 10 to 60 parts by weight of at least one flame retardant selected from the group consisting of aluminum hydroxide, magnesium hydroxide and magnesium hydroxide carbonate compound;
- 1 to 20 parts by weight of at least one flame retardant aid selected from the group consisting of antimony-based compound, halogen-based compound and boron-based compound; and
- 1 to 60 parts by weight of polar polymer resin selected from ethylene acrylate copolymer.

2. The polymer resin composition according to claim 1, **characterized in that** the phthalate-free plasticizer is selected from the group consisting of C8-C20 alcohol-based plasticizer, ester-based plasticizer, carboxylate-based plasticizer, aliphatic plasticizer and benzoate-based plasticizer.

3. The polymer resin composition according to claim 1, **characterized in that** the flame retardant aid is antimony trioxide as antimony-based compound.

4. The polymer resin composition according to claim 1, **characterized in that** the flame retardant aid is bromine-based or chlorine-based compound as halogen-based compound.

5. The polymer resin composition according to claim 1, **characterized in that** the flame retardant aid is zinc borate or borate hydroxide compound as boron-based compound.

6. A polymer resin material manufactured using the polymer resin composition according to any one of claims 1 to 5.

7. A cable or electric wire manufactured using the polymer resin composition according to any one of claims 1 to 5.
